Europäisches Patentamt

European Patent Office

Office européen des brevets

(19)

(11)  EP 1 009 987 B1

(12)  FASCICULE DE BREVET EUROPEEN

(45) Date de publication et mention
de la délivrance du brevet:
**11.08.2004  Bulletin 2004/33**

(21) Numéro de dépôt: **98942825.5**

(22) Date de dépôt: **04.09.1998**

(51) Int Cl.7: **G01M 15/00**

(86) Numéro de dépôt international:
**PCT/FR1998/001895**

(87) Numéro de publication internationale:
**WO 1999/013310 (18.03.1999 Gazette 1999/11)**

(54)  **PROCEDE DE DETECTION D'UNE PERTURBATION ANORMALE DU COUPLE D'UN MOTEUR A COMBUSTION INTERNE**

VERFAHREN ZUR DETEKTION VON ABNORMALEN STOERUNGEN IM DREHMOMENT EINES VERBRENNUNGSMOTORS

METHOD FOR DETECTING AN ABNORMAL DISTURBANCE OF AN INTERNAL COMBUSTION ENGINE TORQUE

(84) Etats contractants désignés:
**DE ES GB IT**

(30) Priorité: **05.09.1997  FR 9711052**

(43) Date de publication de la demande:
**21.06.2000  Bulletin 2000/25**

(73) Titulaire: **Renault s.a.s.**
**92100 Boulogne Billancourt (FR)**

(72) Inventeur: **DONY, Guillaume**
**F-91290 Arpajon (FR)**

(56) Documents cités:
**EP-A- 0 611 882          EP-A- 0 667 516**
**US-A- 5 440 921**

• **PATENT ABSTRACTS OF JAPAN vol. 095, no. 004, 31 mai 1995 & JP 07 019103 A (NIPPONDENSO CO LTD), 20 janvier 1995**

## Description

La présente invention concerne un procédé de détection d'une perturbation anormale du couple d'un moteur à combustion interne équipant notamment un véhicule automobile. La présente invention vise plus particulièrement un procédé permettant de suspendre le diagnostic des ratés de combustion lorsque des perturbations anormales engendrées en particulier par une route au revêtement dégradé ou par tout autre facteur, créent un bruitage trop important sur le signal utilisé pour le diagnostic des ratés de combustion.

Dans le cadre des réglementations antipollution telles que les normes américaines OBD (On Board Diagnostic), il est prévu que les systèmes électroniques de contrôle moteur équipant les véhicules automobiles puissent diagnostiquer certains dysfonctionnements du moteur qui ont un impact sur les émissions de polluants.

C'est ainsi qu'il est prévu d'implanter dans les systèmes électroniques de contrôle moteur futurs, des systèmes capables de diagnostiquer le bon fonctionnement de la sonde à oxygène ou du circuit EGR (recirculation des gaz d'échappement), la reconnaissance d'un défaut de fonctionnement agissant sur les émissions de polluant devant engendrer, l'activation de modes de fonctionnement dégradés et/ou l'allumage d'un voyant au tableau de bord avertissant le conducteur (réglementations peu sévères) soit, l'arrêt du véhicule (réglementations strictes).

En particulier, les normes américaines et européennes prévoient d'imposer la détection des ratés de combustion et d'identifier le ou les cylindres responsables. Une telle détection doit, par exemple, fournir le pourcentage des ratés de combustion survenant dans un nombre donné de cycles moteur.

Les équipementiers et les constructeurs automobiles ont donc développé un certain nombre de techniques de détection des ratés de combustion.

On peut ainsi citer la méthode de l'accéléromètre qui consiste à détecter un raté de combustion par analyse de la variation d'accélération longitudinale du véhicule, ou la méthode utilisant une sonde à oxygène proportionnelle disposée dans la ligne d'échappement. De même, on peut citer la méthode utilisant des capteurs de pression débouchant dans les chambres à combustion, ou celle basée sur la mesure de la tension d'arc ou du courant d'ionisation des bougies d'allumage (pour les moteurs à allumage commandé).

La méthode toutefois la plus couramment utilisée est celle déduisant l'existence de ratés de combustion de la mesure de la vitesse instantanée du vilebrequin. Sa mise en oeuvre est, en effet, très simple puisqu'il ne s'agit alors que d'opérer un traitement logiciel du signal fourni par le capteur de position angulaire du vilebrequin, signal déjà utilisé par le système de contrôle moteur pour commander l'injection du carburant, ainsi aucun dispositif matériel spécifique n'est requis pour la mise en oeuvre de cette méthode.

L'analyse du seul signal fourni par le capteur de position vilebrequin pour détecter les éventuels ratés de combustion présente cependant certains inconvénients.

La méthode de détection des ratés de combustion est, en effet, basée sur le postulat qu'un raté de combustion se traduit par une chute du couple gaz, laquelle génère à son tour une altération correspondante de la vitesse instantanée du vilebrequin. Il suffit donc de repérer les altérations de la vitesse instantanée du vilebrequin pour identifier les ratés de combustion. Par exemple, la demande EP 0 667 516 décrit un procédé de détection des ratés de combustion, dans lequel le couple gaz est mesuré.

Cependant la vitesse instantanée de rotation du vilebrequin et du volant moteur qui lui est solidaire, ne reflète pas seulement le fonctionnement du moteur et la poussée alternative des bielles sous l'effet de la combustion du mélange carburé, mais également le fonctionnement de l'ensemble de la chaîne cinématique liant le moteur à l'interface pneu/sol.

En effet, l'énergie mécanique en bout de vilebrequin est transmise aux roues par un système de transmission comprenant traditionnellement un embrayage, une boîte de vitesses et un différentiel, ce système de transmission possédant un amortissement et une rigidité propre. Il en résulte donc, que toute variation brusque du couple au niveau de l'un quelconque des éléments de la chaîne cinématique, comme par exemple au niveau des roues du véhicule par suite d'un mauvais état du revêtement de la route, est répercutée au vilebrequin avec des oscillations dont l'importance va dépendre des caractéristiques du système de transmission et de la perturbation.

Il en résulte que les brusques altérations de la vitesse instantanée du vilebrequin ne sont donc pas uniquement occasionnées par des ratés de combustion mais par également toutes les perturbations pouvant affecter la chaîne cinématique de transmission et donc notamment une route en mauvais état.

Il apparaît donc important, pour identifier correctement les seuls ratés de combustion de pouvoir discriminer parmi les altérations de vitesses du vilebrequin celles dues effectivement aux chutes de couple gaz de celles ayant d'autres causes et de ne pas comptabiliser ces dernières.

Pour ce faire, des stratégies complémentaires de désactivation du programme de détection des ratés de combustion ont donc été développées, stratégies basées sur la reconnaissance des perturbations affectant la chaîne cinématique de transmission. On peut ainsi citer, celles utilisant l'information vitesse roue fournie par un capteur spécifique ou bien encore celles requérant un accéléromètre. On peut également citer la méthode décrite dans le document GB-A-2.290.870 qui cherche à repérer ces perturbations à travers les mouvements du carburant dans le réservoir.

On peut également citer celles des documents US 5 440 921 et JP 07 019 103 qui utilisent la valeur du paramètre de détection de raté de combustion pour déterminer si le véhicule circule sur une route de mauvaise qualité.

Il apparaît toutefois aujourd'hui qu'aucune des méthodes proposées ne permet de distinguer de façon simple, économique et avec suffisamment de précision et de fiabilité, les altérations de la vitesse vilebrequin engendrées par des perturbations affectant la chaîne cinématique de transmission.

L'objet de la présente invention est donc de perfectionner le procédé décrit ci-dessus, en proposant un procédé de détection des perturbations anormales du couple autres que celles liées aux ratés de combustion proprement dit, permettant de suspendre temporairement le diagnostic des ratés de combustion.

Le procédé pour détecter une perturbation anormale du couple d'un moteur à combustion interne et suspendre le fonctionnement d'un système de diagnostic des ratés de combustion, est du type type opérant par analyse des valeurs d'une grandeur représentative de la qualité des combustions par observation de la rotation du vilebrequin du moteur,

Selon l'invention, le procédé pour détecter une perturbation anormale du couple est caractérisé en ce qu'il comporte :

- la définition d'un critère de stabilité de la grandeur représentative de la qualité des combustions pour chacun des cylindres du moteur et pour chacune des combustions ;
- la comparaison, après chaque combustion, de ce critère de stabilité avec un seuil prédéterminé, et la détection d'une perturbation anormale du couple lorsque ce critère de stabilité est supérieur au seuil, un nombre de fois consécutives donné et ce, pour au moins un cylindre.

Selon une autre caractéristique du procédé pour détecter une perturbation anormale du couple objet de l'invention, ladite grandeur représentative de la qualité des combustions est le couple gaz.

Selon une autre caractéristique du procédé pour détecter une perturbation anormale du couple objet de l'invention, le critère de stabilité, pour un cylindre et une combustion donnés, quantifie l'écart en valeur absolue, entre la valeur de ladite grandeur représentative de la qualité des combustions et, la valeur d'une grandeur statistique représentative de la moyenne des différentes valeurs de la grandeur représentative de la qualité des combustions, valeurs mesurées successivement sur un horizon donné de mesures.

Selon une autre caractéristique du procédé pour détecter une perturbation anormale du couple objet de l'invention, la grandeur statistique représentative de la moyenne des différentes valeurs de la grandeur représentative de la qualité des combustions, est obtenue par un filtre passe-bas du premier ordre avec une constante de filtrage donnée.

Selon une autre caractéristique du procédé pour détecter une perturbation anormale du couple objet de l'invention, le seuil est déduit des variations de la grandeur représentative de la qualité des combustions, observées en fonctionnement normal du moteur et dépend donc du point de fonctionnement moteur.

Selon une autre caractéristique du procédé pour détecter une perturbation anormale du couple objet de l'invention, les combustions étant diagnostiquées comme des ratés de combustion donnent lieu à un traitement particulier dans le calcul du critère de stabilité.

Selon une autre caractéristique du procédé pour détecter une perturbation anormale du couple objet de l'invention, les combustions étant diagnostiquées comme des ratés de combustion donnent lieu à un traitement particulier dans la comparaison du critère de stabilité avec le seuil prédéterminé.

On comprendra mieux les buts, aspects et avantages de la présente invention, d'après la description donnée ci-après de différents modes de réalisation de l'invention, ces modes de réalisation étant donnés à titre d'exemples non limitatifs, en se référant aux dessins annexés, dans lesquels :

- la figure 1 est une vue partielle d'un moteur à combustion interne équipé d'un système de contrôle moteur permettant la mise en oeuvre du procédé selon l'invention ;

- les figures 2a à 2c, sont des chronogrammes précisant le principe du procédé de détection des perturbations anormales du couple objet de l'invention ;

- la figure 3 est un bloc-diagramme précisant le déroulement du procédé de détection des perturbations anormales du couple objet de l'invention.

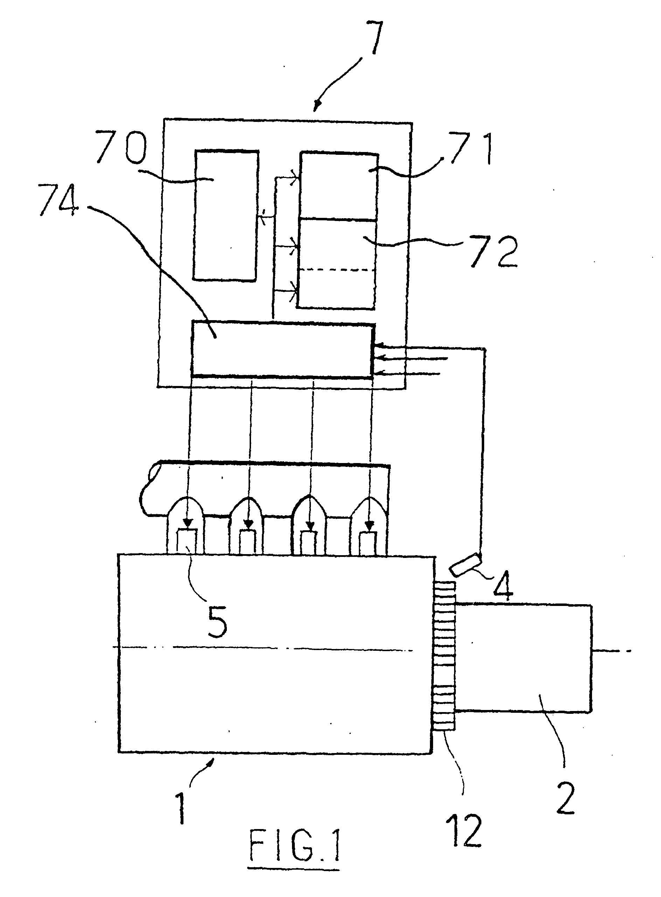

En se reportant sur la figure 1, on voit, présentée de façon simplifiée, la représentation d'un système de contrôle moteur mettant en oeuvre le procédé permettant de détecter des ratés de combustion objet de la présente invention. Seules les parties constitutives nécessaires à la compréhension de l'invention ont été montrées.

Le moteur à combustion interne, qui est référencé 1, est plus particulièrement destiné à équiper un véhicule automobile ou routier. Le moteur 1 est connecté à un dispositif de transmission adapté pour transmettre le mouvement aux roues du véhicule. Ce dispositif de transmission comprend de façon classique un embrayage, une boîte de vitesses 2 et un différentiel non figuré.

Le moteur multicylindre 1 du type à quatre temps est équipé d'un dispositif d'injection du carburant du type multipoint à commande électronique grâce auquel chaque cylindre est alimenté en carburant à partir d'un électro-injecteur 5 spécifique.

L'ouverture de chaque électro-injecteur 5 est commandée par le système électronique de contrôle moteur 7, qui ajuste la quantité de carburant injectée et l'instant d'injection dans le cycle suivant les conditions de fonctionnement du moteur, de façon à asservir précisément la richesse du mélange combustible air-carburant admis dans les cylindres à une valeur de consigne prédéterminée.

Le système électronique de contrôle moteur 7 comprend classiquement un microprocesseur 70, des mémoires vives 71, des mémoires mortes 72, des convertisseurs analogiques-numériques 74 ainsi que différentes interfaces d'entrées et de sorties.

Le microprocesseur 70 comporte des circuits électroniques et des logiciels appropriés pour traiter les signaux en provenance de capteurs adaptés, déterminer les états du moteur et mettre en oeuvre des opérations prédéfinies afin de générer des signaux de commande à destination notamment des injecteurs (et des bobines d'allumage dans le cas d'un moteur à allumage commandé) de façon à gérer au mieux les conditions de combustion dans les cylindres du moteur.

Parmi les signaux d'entrée du microprocesseur 70 figurent notamment ceux adressés par un capteur vilebrequin 4. Ce capteur 4, du type par exemple à réluctance variable, est monté fixe sur le bâti du moteur pour être positionné devant une couronne de mesure 12 fixée à une extrémité du vilebrequin.

Cette couronne 12 est munie à sa périphérie d'une succession de dents et de creux identiques à l'exception d'une dent qui a été supprimée de façon à définir un repère absolu permettant de déduire l'instant de passage au Point Mort Haut d'un cylindre donné de référence, en l'occurrence le cylindre n°1.

Le capteur 4 délivre un signal Dn correspondant au défilement des dents de la couronne 12, signal qui après traitement permet de générer un signal PMH à chaque demi-tour du Vilebrequin permettant le repérage des passages au Point Mort Haut alternativement des cylindres n°1, 3, 4, 2.

Le traitement du signal Dn émis par le capteur 4 permet également de mesurer la vitesse de défilement des dents de la couronne 12, et ainsi d'obtenir le régime de rotation instantané du moteur.

Le microprocesseur 70 exploite donc le signal Dn pour produire une grandeur représentative caractéristique de la qualité des combustions survenant dans chacun des cylindres du moteur et opérer le diagnostic des ratés de combustion selon un procédé connu en lui-même qui n'étant pas l'objet de la présente invention ne sera pas détaillé.

La grandeur représentative caractéristique de la qualité des combustions peut, par exemple, être l'accélération instantanée du vilebrequin (cf. les demandes de brevets DE-3.939.113 ou DE-4.002.208), ou encore le couple dont la valeur est obtenue par analyse spectrale de la vitesse instantanée du vilebrequin (cf. les demandes de brevet français n° 91/11273 et 91/11274 déposées par la Demanderesse relatives à un "procédé et dispositif de mesure du couple gaz d'un moteur thermique à combustion interne").

Selon le mode de réalisation décrit ci-après la grandeur représentative choisie pour faire fonctionner à la fois le système de diagnostic des ratés de combustion et le système permettant de suspendre le diagnostic des ratés de combustion lorsque des perturbations extérieures au fonctionnement du moteur viennent perturber ce diagnostic, est le couple gaz Cg.

Lors du fonctionnement du moteur, des moyens de calcul adaptés activés par le microprocesseur 70 fournissent donc les valeurs successives de couple, référencées Cg,n,i pour caractériser la valeur de couple gaz Cg correspondante à la n-ième combustion du cylindre N°i.

Ces valeurs sont ensuite traitées par des premiers moyens de calcul destinés à opérer le diagnostic des ratés de combustion et des seconds moyens de calcul spécifiques à la présente invention destinés à repérer la survenue de perturbations de couple susceptibles de fausser le diagnostic des ratés de combustion, dues par exemple au dispositif de transmission et notamment à l'état du revêtement de la route où circule le véhicule.

Selon l'invention, le procédé de détection de la survenue de perturbations de couple susceptibles de fausser le diagnostic des ratés de combustion est opéré par l'analyse des variations du couple, cylindre par cylindre. Dans l'exemple de réalisation décrit ci-après, il suffit de détecter la survenue de perturbations de couple sur un seul cylindre pour suspendre le diagnostic des ratés de combustion sur tous les cylindres.

Bien évidement en variantes de réalisation, on peut prévoir que la survenue de perturbations de couple sur un seul cylindre ne suspend le diagnostic des ratés de combustion que pour le cylindre considéré ou bien encore qu'il est nécessaire de détecter la survenue de perturbations de couple sur un nombre prédéterminé de cylindres pour suspendre le diagnostic des ratés de combustion sur tous les cylindres.

De même, en cas de détection de perturbations anormales de couple, l'inhibition du diagnostic des ratés de combustion peut être déclenchée immédiatement après ou bien encore être opérée rétroactivement sur une période donnée précédent la détection des perturbations pour tenir compte du temps de réponse plus ou moins important suivant le mode de réalisation du procédé de détection des perturbation choisi.

Selon le procédé objet de l'invention, on opère donc dans un premier temps le calcul d'une grandeur statistique MCg,n,i représentative de la moyenne des différentes valeurs de couple mesurées successivement sur le cylindre N°i sur un horizon donné de mesures du couple.

Le calcul de la grandeur statistique MCg,n,i est, par exemple, obtenu par un filtre passe-bas du premier ordre avec une constante de filtrage τ donnée.

Dans ce cas, pour toute nouvelle valeur du couple Cg,n,i la valeur statistique MCg,n,i est déterminée à partir de la valeur statistique calculée précédemment MCg,n-1,i, à partir de la formule de récurrence suivante :

$$MCg,n,i = MCg,n\text{-}1,i + ((Cg,n,i - (MCg,n\text{-}1,i)) / \tau)$$

A partir de la valeur ainsi calculée de la grandeur statistique MCg,n,i représentative de la moyenne des différentes valeurs de couple Cg,n,i mesurées successivement pour le cylindre N°i sur un horizon donné de mesures du couple, on détermine ensuite, la valeur ECg,n,i définie comme l'écart en valeur absolue entre la valeur de couple Cg,n,i et la valeur statistique MCg,n,i :

$$ECg,n,i = |MCg,n,i - Cg,n,i|$$

Cet écart ECg,n,i est donc représentatif des variations du couple moteur pour le cylindre considéré et donc de la stabilité de ce couple.

En variante de réalisation, on peut obtenir également ECg,n,i à partir non pas de la valeur MCg,n,i mais celle calculée au cycle précédent MCg,n-1,i et ce notamment pour calculer plus rapidement ECg,n,i. On a alors :

$$ECg,n,i = |MCg,n\text{-}1,i - Cg,n,i|$$

On peut également, en variante de réalisation du procédé selon l'invention, éliminer du calcul de MCg,n,i l'incidence des ratés de combustion survenus durant la période observée et détectés par lesdits premiers moyens de calcul. Pour ce faire, on opère dans le calcul de la grandeur statistique MCg,n,i, le remplacement de la valeur du couple correspondant à un raté de combustion par la dernière valeur ne correspondant pas à un raté de combustion ou bien encore, en bloquant le filtre à sa valeur précédente MCg,n,i = MCg,n-1,i

Bien évidement, si le cylindre présente des ratés de combustion de façon continue (défaut d'allumage, etc.), la détection des perturbations anormales est alors suspendue pour ce cylindre là, jusqu'à ce que la défaillance cesse.

Quelle que soit la formule de calcul de ECg,n,i, il suffit ensuite de comparer cet écart à un seuil fixe prédéterminé de stabilité Sstab suivant le point de fonctionnement du moteur pour isoler de façon précise les perturbations anormales de couple (une route au revêtement dégradé, des à-coups de transmission, ...) susceptibles de perturber le diagnostic des ratés de combustion.

Le seuil de stabilité Sstab est déduit des excursions de couple maximales rencontrées en fonctionnement normal, il dépend donc du point de fonctionnement moteur et est par exemple donné par la formule suivante :

$$Sstab = \alpha \, . \, \delta Cg$$

Selon cette formule $\alpha$ est un facteur calibré ($0<\alpha<1$) et $\delta Cg$ est la chute de couple attendue au point de fonctionnement. Sstab qui est tabulée ou obtenue par calcul peut également évoluer avec le vieillissement du moteur. Bien entendu, tout autre image du couple nominal fourni par le moteur peut être utilisée à la place de la chute de couple.

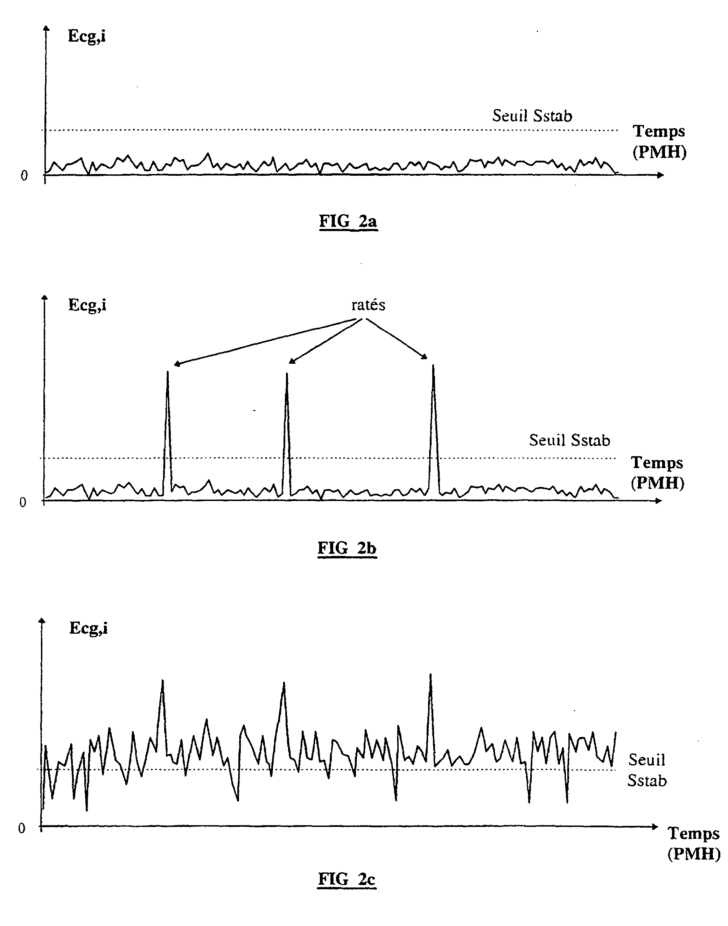

Les graphiques des figures 2a, 2b et 2c illustrent le principe de l'invention.

Pour des conditions de fonctionnement stabilisées du moteur, lorsque le dispositif de transmission n'est sujet à aucune perturbation importante et en l'absence de raté de combustion, figure 2a, les valeurs du couple gaz Cg,n,i pour un cylindre i donné, évoluent alors faiblement de part et d'autre de la valeur MCg,n,i. Le critère ECg,n,i reste alors proche de 0 et est donc toujours inférieur au seuil Sstab.

Lorsque des ratés de combustion surviennent, figure 2b, le critère ECg,n,i atteint des valeurs extrêmes à chaque raté car le couple instantané Cg,n,i chute alors brutalement tandis que la valeur MCg,n,i reste à une valeur élevée, mais pour les autres combustions les valeurs du couple gaz Cg,n,i évoluent faiblement de part et d'autre de la valeur Mcg,n,i et le critère ECg,n,i reste alors proche de 0. Le seuil Sstab n'est donc dépassé que de façon ponctuelle et uniquement lors de la survenue de ratés de combustion.

Lorsque par contre des perturbations extérieures au fonctionnement du cylindre comme par exemple un mauvais état de la route, cf. figure 2c, le couple Cg,n,i est alors bruité de façon aléatoire, le critère de stabilité ECg,n,i l'est également et il atteint un niveau moyen nettement plus élevé. Le seuil Sstab est alors fréquemment dépassé.

Il suffit donc de noter la fréquence de dépassement du seuil Sstab pour détecter la survenue de perturbations anormales du couple. Par exemple, il suffit d'enregistrer p dépassements consécutifs du seuil Sstab par le critère ECg,n,i pour déduire la survenue de perturbations anormales du couple, avec p entier naturel supérieur ou égal à 2, et suspendre le diagnostic des ratés de combustion.

Pour toutefois ne pas confondre l'apparition de perturbations anormales du couple avec un dysfonctionnement du cylindre générant des ratés de combustion en continu, on peut ne pas comptabiliser les dépassements du seuil Sstab lorsqu'il s'agit d'un raté de combustion.

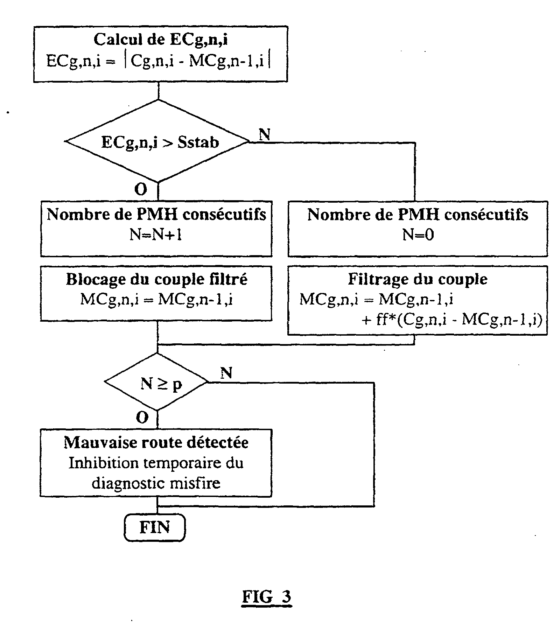

Conformément à la figure 3, un procédé selon l'invention se compose donc des étapes suivantes exécutées après chacune des combustions indicée n et pour un cylindre donné N°i:

(i) acquisition de la valeur de couple gaz générée par la combustion Cg,n,i et calcul de la valeur ECg,n,i (en utilisant MCg,n-1,i) ;

(ii) comparaison de ECg,n,i à Sstab

si ECg,n,i est inférieure à Sstab, le compteur N est réinitialisé à 0 (N=0) ;

si ECg,n,i est supérieure ou égale à Sstab, le compteur N est incrémenté d'une unité (N=N+1) ;

(iii) en parallèle MCg,n,i est calculé ;

(iv) comparaison de N à p

si la valeur du compteur N est inférieure à p, on considère donc qu'il n'y a pas de détection de perturbations anormales de couple

si par contre la valeur du compteur N est supérieure ou égale à p, on considère alors qu'il y a détection de perturbations anormales de couple et on suspend alors le diagnostic des ratés de combustion.

Le procédé décrit de suspension du diagnostic des raté de combustion présente donc l'avantage d'être particulièrement simple et rapide pour opérer la détection des perturbations anormales de couple susceptibles de fausser le diagnostic des ratés de combustion et ce, sans surcoût dû à un composant. Ce procédé est par ailleurs remarquablement fiable et n'entraîne donc l'inhibition du diagnostic des ratés de combustion que seulement lorsque cela est nécessaire.

Ainsi, il est possible d'opérer non pas directement sur les valeurs Cg,n,i mais sur des valeurs Cg,n,i filtrées.

Pour ce qui est de la mise en oeuvre du dispositif de détection des ratés de combustion, quelle que soit la variante choisie, elle peut être réalisée sous diverses formes :

- soit avec des composants d'électronique analogique pour lesquels les sommateurs, comparateurs et autres filtres sont réalisés à l'aide d'amplificateurs opérationnels ;

- soit avec des composants d'électronique numérique qui réaliseraient la fonction en logique câblée ;

- soit par un algorithme de traitement du signal implanté sous forme d'un module logiciel composant d'un système logiciel de contrôle moteur faisant fonctionner le microcontrôleur d'un calculateur électronique.

- soit encore, par une puce spécifique (custom) dont les ressources hardware et software auront été optimisées pour réaliser les fonctions objet de l'invention : puce microprogrammable ou non, encapsulée séparément ou bien tout ou partie d'un coprocesseur implanté dans un microcontrôleur ou microprocesseur etc.

De même, l'invention comprend tous les équivalents techniques appliqués à un moteur à combustion interne quels que soient son cycle de combustion (2 temps, 4 temps), le carburant utilisé diesel ou essence ou encore, le nombre de ses cylindres.

## Revendications

**1.** Procédé pour détecter une perturbation anormale du couple d'un moteur à combustion interne et suspendre le fonctionnement d'un système de diagnostic des ratés de combustion, le procédé étant operé par analyse des valeurs (Cg,n,i) d'une grandeur (Cg) représentative de la qualité des combustions par observation de la rotation du vilebrequin du moteur, le procédé comportant :

- la définition d'un critère de stabilité (ECg,n,i) de ladite grandeur (Cg) pour chacun des cylindres (i) du moteur et pour chacune des combustions (n) ;
- la comparaison, après chaque combustion (n), de ce critère de stabilité (ECg,n,i) avec un seuil prédéterminé (Sstab), et la détection d'une perturbation anormale du couple lorsque ledit critère de stabilité (ECg,n,i) est supérieur audit seuil (Sstab) un nombre (p) de fois consécutives donné, pour au moins un cylindre (i), **caractérisé en ce que** ledit critère de stabilité (ECg,n,i) pour un cylindre (i) et une combustion (n) donnés quantifie l'écart en valeur absolue entre la valeur de ladite grandeur (Cg,n,i) et la valeur d'une grandeur statistique (MCg,n,i; MCg,n-1,i) représentative de la moyenne des différentes valeurs de ladite grandeur (Cg,n,i) mesurées successivement sur un horizon donné de mesures.

**2.** Procédé pour détecter une perturbation anormale du couple selon la revendication 1, **caractérisé en ce que** ladite grandeur représentative de la qualité des combustions est le couple gaz (Cg).

**3.** Procédé pour détecter une perturbation anormale du couple selon la revendication 1 ou 2, **caractérisé en ce que** ladite grandeur statistique (MCg,n,i; MCg, n-1, i) représentative de la moyenne des différentes valeurs de ladite grandeur (Cg,n,i), est obtenue par un filtre passe-bas du premier ordre avec une constante de filtrage (τ) donnée.

**4.** Procédé pour détecter une perturbation anormale du couple selon l'une quelconque des revendications 1 à 3, **caractérisé en ce que** ledit seuil prédéterminé (Sstab) est déduit des variations de ladite grandeur statistique (Cg,n,i) observées en fonctionnement normal du moteur et dépend donc du point de fonctionnement moteur.

5. Procédé pour détecter une perturbation anormale du couple selon l'une quelconque des revendications 1 à 4, **caractérisé en ce que** les les combustions étant diagnostiquées comme des ratés de combustion donnent lieu à un traitement particulier dans le calcul dudit critère de stabilité (ECg,n,i).

6. Procédé pour détecter une perturbation anormale du couple selon l'une quelconque des revendications 1 à 5, **caractérisé en ce que** les combustions étant diagnostiquées comme des ratés de combustion sont ignorées dans la comparaison du critère de stabilité (ECg,n,i) avec ledit seuil prédéterminé (Sstab).

**Patentansprüche**

1. Verfahren zum Erkennen einer anormalen Störung des Drehmoments eines Verbrennungsmotors und Suspendieren des Betriebs eines Diagnosesystems für Verbrennungsfehler , wobei das Verfahren durchgeführt wird durch Analyse von Werten (Cg, n, i) einer Größe (Cg), welche repräsentativ für die Qualität der Verbrennungen ist, durch Beobachtung der Rotation der Kurbelwelle des Motors, wobei das Verfahren aufweist:

   - die Definition eines Stabilitätskriteriums (ECg, n i) der Größe (Cg) für jeden der Zylinder (i) des Motors und für jede der Verbrennungen (n);
   - das Vergleichen, nach jeder Verbrennung (n) dieses Stabilitätskriteriums (ECg, n, i) mit einer vorherbestimmten Schwelle (Sstab), und die Erkennung einer anormalen Störung des Drehmoments, wenn das Stabilitätskriterium (ECg, n, i) größer ist als die Schwelle (Sstab) für eine gegebene Anzahl (p) von aufeinander folgenden Malen, für wenigstens einen Zylinder (i),

   **dadurch gekennzeichnet, dass** das Stabilitätskriterium (ECg, n, i) für einen Zylinder (i) und eine Verbrennung (n), welche gegeben sind, die Abweichung als absoluten Wert zwischen dem Wert der Größe (Cg, n, i) und dem Wert einer statistischen Größe (MCg, n, i; MCg, n-1, i) quantifiziert, welche repräsentativ für den Durchschnitt von unterschiedlichen Werten der Größe (Cg, n, i) ist, welche aufeinander folgend gemessen werden über einen gegebenen Horizont von Messungen.

2. Verfahren zum Erkennen einer anormalen Störung des Drehmoments gemäß Anspruch 1, **dadurch gekennzeichnet, dass** die Größe, welche repräsentativ für die Qualität der Verbrennung ist, das Gasmoment (Cg) ist.

3. Verfahren zum Erkennen einer anormalen Störung des Drehmoments gemäß Anspruch 1 oder 2, **dadurch gekennzeichnet, dass** die statistische Größe (MCg, n, i; MCg, n-1, i), welche repräsentativ für den Durchschnitt von unterschiedlichen Werten der Größe (Cg, n, i) ist, erhalten wird über einen Tiefpass erster Ordnung mit einer gegebenen Filterkonstante ($\tau$).

4. Verfahren zum Erkennen einer anormalen Störung des Drehmoments gemäß einem der Ansprüche 1 bis 3, **dadurch gekennzeichnet, dass** die vorherbestimmte Schwelle (Sstab) abgeleitet ist von Variationen der statistischen Größe (Cg, n, i), welche im normalen Betrieb des Motors beobachtet werden und folglich vom Betriebspunkt des Motors abhängen.

5. Verfahren zum Erkennen einer anormalen Störung des Drehmoments gemäß einem der Ansprüche 1 bis 4 **dadurch gekennzeichnet, dass** die Verbrennungen, welche als Verbrennungsfehler diagnostiziert werden, Anlass geben zu einer speziellen Behandlung in der Berechnung des Stabilitätskriteriums (ECg, n, i).

6. Verfahren zum Erkennen einer anormalen Störung des Drehmoments gemäß einem der Ansprüche 1 bis 5 **dadurch gekennzeichnet, dass** die Verbrennungen, welche als Verbrennungsfehler diagnostiziert werden, ignoriert werden in dem Vergleichen des Stabilitätskriteriums (ECg, n, i) mit der vorherbestimmten Schwelle (Sstab).

**Claims**

1. A method for detecting an abnormal disturbance of the torque of an internal combustion engine and suspending the operation of a system for the diagnosis of combustion misfires, the method being carried out by analysing the values (Cg,n,i) of a magnitude (Cg) representative of the quality of the combustions by observing the rotation of the engine crankshaft, the method comprising:

   - the definition of a criterion of stability (ECg,n,i) of the magnitude (Cg) for each of the engine cylinders (i) and for each of the combustions (n),
   - the comparison, after each combustion (n), of this stability criterion (ECg,n,i) with a predetermined threshold (Sstab), and the detection of an abnormal disturbance of the torque when this stability criterion (ECg,n,i) is above the threshold (Sstab) for a given number (p) of consecutive times for at least one cylinder (i),

**characterised in that** the stability criterion (ECg,n, i), for a given cylinder (i) and combustion (n), quantifies the difference in absolute value between the value of the magnitude (Cg,n,i) and the value of a statistical magnitude (MCg,n,i; MCg,n-1,i) representative of the mean of the different values of this magnitude (Cg,n,i) measured successively over a given measurement interval.

2. A method for detecting an abnormal disturbance of the torque as claimed in claim 1, **characterised in that** the magnitude representative of the quality of the combustions is the gas torque (Cg).

3. A method for detecting an abnormal disturbance of the torque as claimed in claim 1 or 2, **characterised in that** the statistical magnitude (MCg,n,i; MCg,n-1,i) representative of the mean of the different values of the magnitude (Cg,n,i) is obtained by a passband filter of the first order with a given filtration constant ($\tau$).

4. A method for detecting an abnormal disturbance of the torque as claimed in any one of claims 1 to 3, **characterised in that** the predetermined threshold (Sstab) is deduced from the variations of the statistical magnitude (Cg,n,i) observed during normal operation of the engine and therefore depends on the engine operation point.

5. A method for detecting an abnormal disturbance of the torque as claimed in any one of claims 1 to 4, **characterised in that** combustions being diagnosed as combustion misfires are processed in a specific way in the calculation of the stability criterion (ECg,n,i).

6. A method for detecting an abnormal disturbance of the torque as claimed in any one of claims 1 to 5, **characterised in that** combustions being diagnosed as combustion misfires are disregarded in the comparison of the stability criterion (ECg,n,i) with the predetermined threshold (Sstab).

FIG.1

Ecg,i

Seuil Sstab

Temps
(PMH)

0

**FIG 2a**

Ecg,i

ratés

Seuil Sstab

Temps
(PMH)

0

**FIG 2b**

Ecg,i

Seuil
Sstab

0

Temps
(PMH)

**FIG 2c**

```
┌─────────────────────────────────┐
│         Calcul de ECg,n,i        │
│  ECg,n,i = │Cg,n,i - MCg,n-1,i│  │
└─────────────────────────────────┘
```

$$ECg,n,i = |Cg,n,i - MCg,n\text{-}1,i|$$

$ECg,n,i > Sstab$ ——N——

O

Nombre de PMH consécutifs
$N=N+1$

Nombre de PMH consécutifs
$N=0$

Blocage du couple filtré
$MCg,n,i = MCg,n\text{-}1,i$

Filtrage du couple
$MCg,n,i = MCg,n\text{-}1,i$
$+ ff*(Cg,n,i - MCg,n\text{-}1,i)$

$N \geq p$ ——N——

O

Mauvaise route détectée
Inhibition temporaire du
diagnostic misfire

FIN

**FIG 3**